# EUROPEAN PATENT APPLICATION

(11) **EP 4 793 242 A1**
(43) Date of publication of application: **19.08.2026**
(21) Application number: 25838923.8
(22) Date of filing: 29.08.2025
(51) Int. Cl.: C02F 1/461, C02F 5/02, C02F 1/463

(54) **COMPOSITE ELECTRODE UNIT, AND ELECTROCHEMICAL WATER TREATMENT SYSTEM AND ELECTROCHEMICAL WATER TREATMENT METHOD**

(30) Priority: 03.06.2025 CN 202510728100
(71) Applicant: Kunshan Meimiao New Material Technology Co., Ltd., Suzhou, Jiangsu 215334 (CN)
(72) Inventor: ZUO, Weixiong, Suzhou, Jiangsu 215334 (CN); LIU, Yani, Suzhou, Jiangsu 215334 (CN)
(74) Representative: Gille Hrabal Partnerschaftsgesellschaft mbB Patentanwälte
(86) International application number: PCT/CN2025/117789
(87) International publication number: WO 2026/118567

(57) **Abstract**

A composite electrode unit, an electrochemical water treatment system and an electrochemical water treatment method are provided. The composite electrode unit includes: a cathode for water electrolysis, a porous insulating filler layer and an anode for water electrolysis; the porous insulating filler layer is located between the cathode for water electrolysis and the anode for water electrolysis; and a material of an internal part of the porous insulating filler layer itself does not contain exchangeable ions, and the internal part refers to a non-surface part. The system respectively integrates a cathode and an anode on both sides of the porous insulating filler layer to form a composite electrode unit with a unique "filler-electrode" integrated structure. Under the driving of a ultra-low direct-current operating voltage, the transmission of water is controlled through filler micropores to achieve blocking of the migration of hydroxide radicals, while diffusing the hydroxide radicals into an aqueous bulk phase of a cathode chamber by means of the local gradient diffusion effect generated by a catalytic reaction on the surface of an electrode and the forced diffusion effect of pumping, promoting rapid crystallization and precipitation of scale-forming ions in a cathode region, reducing the hardness of the water.

## Description

### TECHNICAL FIELD

The present application relates to the technical field of water treatment, and mainly relates to a composite electrode unit, an electrochemical water treatment system and an electrochemical water treatment method.

### BACKGROUND

In industrial water systems, circulating cooling water serves as a core medium for maintaining equipment operation, and its water quality management faces severe challenges: traditional processes rely on repeated concentration cycles, which can easily lead to mineral salt deposition and frequent scaling. Hard scale will not only accelerate the electrochemical corrosion of metal pipelines, causing the risk of local perforation, but also significantly reduce the heat transfer efficiency of heat exchange equipment, directly affecting the production efficiency. For a long time, chemical intervention methods such as pH adjustment with acids and bases or adding scale inhibitors have been widely used in the industry. Although these methods can alleviate the scaling problem in a short term, they have disadvantages such as high consumption of agents, secondary pollution hazards, and high operation and maintenance costs. At the same time, the concentration of chloride ions (chloride radicals) in water also gradually increases the corrosion of metal equipment. With the deepening of a green manufacturing concept, new hardness and chlorine removal technologies based on electrochemical principles have emerged as the times require.

An electrochemical hardness and chlorine removal technology achieves a dual breakthrough of water quality control and resource recovery through an electrolysis process, and its basic principle is that: in a cathode chamber, a large amount of hydroxide ions are generated through an electrolysis reaction, which promotes conversion of bicarbonate radicals in water into carbonate radicals under an alkaline environment, and drives directional migration of scale-forming ions such as calcium ions and magnesium ions to preferentially form crystalline precipitates such as calcium carbonate and magnesium hydroxide, achieving targeted separation of hard scale; and in an anode chamber, chloride ions are oxidized to produce HClO/ClO⁻ and trace chlorine gas which have a sterilization function, while hydrogen ions generated by water electrolysis can dynamically adjust a pH of the system to form an adaptive scale inhibition environment. This technology not only abandons the external addition of traditional scale inhibitors and acid and base agents, avoiding the risk of chemical residue pollution from the source, but also inhibits the growth of microorganisms through the simultaneous generation of active chlorine substances, thus solving the industry problem of mutual strengthening of scaling and corrosion. The concentration ratio of the treated circulating water system is significantly improved. While reducing the amount of water replenishment and sewage discharge, the synergistic optimization of water resource utilization efficiency and environmental benefits is achieved, providing a technical path with both cleanliness and economy for industrial circulating water management.

The above technical route has several serious problems: firstly, the utilization efficiency of hydroxide ions generated by water electrolysis is low; secondly, the single-stage voltage of an electrolysis unit is high; and thirdly, there is a problem of self-scaling of electrodes. For example, Chinese patent "CN101585569A-circulating water electrolytic descaling device and descaling method" discloses a circulating water electrolytic descaling device and method, which belongs to the technical field of water treatment environmental protection. A core of the device includes a metal reaction chamber (as an electrolysis cathode), an anode, a test electrode, an ultrasonic cleaner and an automatic control system. Its working principle is divided into two stages: electrolysis and scaling, and cleaning and descaling: during the electrolysis process, hydroxide ions are generated in a cathode chamber so that calcium ions and magnesium ions in water are bonded to the carbonate radicals to form loose soft scale deposited on an inner wall of the reaction chamber, while chlorine ions are oxidized on the anode to generate sterilizing substances such as hypochlorous acid and chlorine gas; and when the test electrode detects that a scale layer is thickened, causing a resistance to exceed a limit, the system automatically switches to a cleaning mode, a water inlet valve and a water outlet valve are closed, and the ultrasonic cleaner is started to peel off the scale, and the scale is discharged through a drain valve. This technology combines electrolysis and ultrasonic physical cleaning, without the need for chemical scale inhibitors, and achieves the integration of descaling, sterilization, and softening of water quality by dynamically adjusting a pH and active substances. The concentration ratio of circulating water is significantly increased (calcium hardness is reduced by 44%), and the device has automatic control and epoxy resin anti-corrosion structures, which effectively solves the problems of traditional methods such as strong dependence on agents, frequent maintenance, and secondary pollution.

However, the applicant found in the process of implementing the present application that an electrolysis system in Chinese patent "CN101585569A-circulating water electrolytic descaling device and descaling method" adopts an integrated tank design. During the electrolytic descaling process, the cathode and the anode coexist in the same reaction chamber and no ion isolation is provided, resulting in that the system is in a dynamic neutral environment as a whole, and the utilization efficiency of hydroxide ions generated by electrolysis is low; and at the same time, a distance between the cathode and the anode is large, and a cell voltage of an electrolysis unit is high, resulting in increased electric energy consumption. Experimental data show that at the same current density, for every 1 cm increase in the distance between two electrodes, the cell voltage rises by about 0.5-1.2 V, and the energy consumption increases by 15%-30%. This high energy consumption characteristic limits the application economy of this technology in large-scale industrial circulating water systems.

In order to solve the above problems, the present application is proposed.

### SUMMARY

The present application provides a composite electrode unit, an electrochemical water treatment system and an electrochemical water treatment method. Compared with the prior art, the breakthroughs of the present application include: (1) a porous insulating filler layer is adopted, and combined with a cathode and an anode, an integrated composite electrode unit is formed; the porous nature of the porous insulating filler layer allows water molecules to pass through in a constrained manner; (2) a built-in electric field is formed in the porous insulating filler layer to resist an applied voltage, reducing the high energy consumption caused by a high cell voltage; (3) due to the hydrophobic action of the porous insulating filler layer, the migration of hydroxide ions generated at the cathode is inhibited, and then the hydroxide ions are forcibly diffused into an aqueous bulk phase of a cathode chamber at a high flow rate, accelerating their bonding to scaling ions such as calcium and magnesium ions, and improving the utilization rate of the hydroxide ions; (4) migration of H⁺ generated at the anode is inhibited due to the hydrophobic action of the porous insulating filler layer, and then forced diffusion is performed at a high flow rate to form an acidic environment in an anode region, promoting oxidation of chloride ions into sterilizing substances such as hypochlorous acid and chlorine gas in the acidic environment; (5) catalytic electrodes for water electrolysis are adopted, further reducing a voltage of water electrolysis, and reducing energy consumption; and (6) in addition to directly using a direct current, automatic switching of the cathode and the anode is performed by using an alternating current (e.g., a square wave alternating current) to achieve automatic descaling. Through the above technical invention, the present application improves the defects of the existing electrolytic descaling technology, greatly improves the electrolytic descaling efficiency, and reduces the electric consumption.

In a first aspect of the present application, provided is a composite electrode unit, including: a cathode for water electrolysis, a porous insulating filler layer and an anode for water electrolysis, wherein the porous insulating filler layer is located between the cathode for water electrolysis and the anode for water electrolysis; and a material of an internal part of the porous insulating filler layer itself does not contain exchangeable ions, and the internal part refers to a non-surface part.

Preferably, the cathode for water electrolysis, the porous insulating filler layer and the anode for water electrolysis are in close contact with one another.

One of the key points of the present application is that the material itself of the internal part of the porous insulating filler layer does not contain exchangeable ions. In the present application, it is distinguished whether the material itself of the filler layer is "insulating" or "conductive" according to a manner in which ions in an aqueous solution pass through the porous filler layer when the porous filler layer is placed in the aqueous solution containing ions. If a material of the porous filler layer itself has exchangeable ions, e.g., an anion exchange resin material itself has anions available for ion exchange, and a cation exchange resin material itself has cations available for ion exchange, the ions in the aqueous solution can migrate through the porous filler layer in two ways:
A. migration by ion exchange with the material of the porous filler layer itself, where this migration is selective, e.g., anion exchange resin only allows anion migration and not cation migration, and cation exchange resin only allows cation migration and not anion migration; and
B. migration by the flow of the aqueous solution itself within pores of a porous material, where this migration is non-selective, and both anion and cation ions in the aqueous solution can migrate.

Thus, when the material of the porous filler layer itself has exchangeable ions, it appears that the porous filler layer itself is electrically conductive and ionically conductive, i.e., electrically conductive since the ion migration way A is performed through the material of the porous filler layer itself, and thus the porous filler layer of which the material itself has exchangeable ions is referred to as a "porous electrically conductive filler layer".

If the material of the porous filler layer itself does not contain exchangeable ions, i.e., the material itself does not provide ion exchange, when the porous filler layer is placed in an aqueous solution containing ions, the ion migration way A described above does not exist, and ion migration depends only on the ion migration way B described above, it appears that the porous filler layer itself is electrically non-conductive and conducts electricity only by the flow of the aqueous solution in the pores. Therefore, the porous filler layer of which the material itself does not contain exchangeable ions is referred to as a "porous insulating filler layer", which is the filler layer used in this application.

The above composite electrode unit is a minimum technical unit of the present application, and also a minimum saleable patent implementation unit. The above composite electrode unit may be placed in an electrolytic cell and begin to operate upon application of a voltage.

The material of the internal part of the porous insulating filler layer itself does not contain exchangeable ions, and the internal part refers to the non-surface part. In other words, the material of the internal part of the porous insulating filler layer itself does not contain exchangeable ions, and the material of the internal part of the porous insulating filler layer does not allow ion transfer by ion exchange. Then ions in the solution outside the porous insulating filler layer cannot pass through the porous insulating filler layer only by ion exchange of the material of the porous insulating filler layer itself.

Of course, the surface of the porous insulating filler layer may or may not contain ions, which does not affect that ions in the solution outside the porous insulating filler layer cannot pass through the porous insulating filler layer only by ion exchange with the material of the porous insulating filler layer itself.

In the present application, there is no requirement whether the material of the porous insulating filler layer is hydrophobic or hydrophilic. Preferably, however, the porous insulating filler layer is made of a hydrophobic material as a whole. Since the hydrophobic material can inhibit the flow of the aqueous solution within the pores of the porous insulating filler layer, i.e., inhibit the migration rate of the aforementioned ion migration way B.

Or the material of the internal part of the porous insulating filler layer itself is a hydrophobic material and the surface of the porous insulating filler layer is made of a hydrophilic material, and the internal part refers to a non-surface part. Such a setting may also inhibit the migration rate of the ion migration way B described above.

Of course, the solution of the present application can also be partially realized by the porous insulating filler layer being made of the hydrophilic material, but the acceleration of the ion migration way B causes more hydroxide ions in the cathode chamber to migrate to an anode chamber by the ion migration way B before bonding to calcium ions or magnesium ions to form precipitates, resulting in the utilization efficiency of hydroxide ions being lower than that of the hydrophobic material of the porous insulating filler layer, but the low efficiency does not mean that it is not feasible.

Preferably, the porous insulating filler layer has a porosity of 1-98%, a thickness of 0.05-5 mm and a pore size of 0.1-500 microns.

More preferably, the porosity is 50-98%. Still preferably, the porosity is 52-98%. Still preferably, the porosity is 55-98%. Further still preferably, the porosity is 60-98%. Still further, the porosity may be in the range of 60-75%, 60-73%, 52-75%, 52-73%, 52-68%, 55-75%, 55-73%, 55-68%, or the like.

More preferably, the thickness may be in the range of 0.05-5 mm, 0.1-5 mm, 0.18-5 mm, 0.2-5 mm, 0.5-5 mm, 1-5 mm, 1.2-5 mm, 1.5-5 mm, 2-5 mm, 2.2-5 mm, 2.5-5 mm, 0.2-2.5 mm, 0.2-2.2 mm, or the like.

The pore size may be in the range of 0.1-0.5 microns, 0.2-0.8 microns, 0.3-500 microns, 0.5-500 microns, 0.1-0.3 microns, 0.3-1 microns, 0.1-0.4 microns, 1-500 microns, 0.2-0.6 microns, 10-200 microns, 0.2-0.6 microns, 10-500 microns, or the like.

Preferably, the material of the porous insulating filler layer is selected from: polyethylene, polystyrene, polyphenylene sulfide, polyvinyl chloride, polypropylene, polyurethane, polyamide, polyether sulfone, polypropylene hollow fiber, polytetrafluoroethylene, polyvinylidene fluoride, sulfonated polyether ether ketone, polybenzimidazole, polyimide, asbestos, alumina, silicon carbide, silicon nitride, zirconia, boron nitride, mullite, cordierite, aluminum titanate, or silica.

That is, the material of the porous insulating filler layer may be a single material or a mixed material of a plurality of materials or a composite material of a plurality of single materials.

In other words, the porous insulating filler layer is selected from one or a combination of more: a polyethylene layer, a polystyrene layer, a polyphenylene sulfide layer, a polyvinyl chloride layer, a polypropylene layer, a polyurethane layer, a polyamide layer, a polyether sulfone layer, a polypropylene hollow fiber layer, a polytetrafluoroethylene composite layer, a polyvinylidene fluoride layer, a sulfonated polyether ether ketone layer, a polybenzimidazole layer, a polyimide layer, an asbestos layer, an alumina layer, a silicon carbide layer, a silicon nitride layer, a zirconia layer, a boron nitride layer, a mullite layer, a cordierite layer, an aluminum titanate layer, and a silica layer.

In addition, the porous insulating filler layer may also be selected as an organic layer doped with inorganic substances such as iron oxide.

Preferably, the surface of the porous insulating filler layer is modified. In other words, the surface of the porous insulating filler layer has a modification layer. The modification layer may be a hydrophilic layer. Hydrophilic modification of the surface of the porous insulating filler layer does not affect the fact that the internal part of the porous insulating filler layer is still hydrophobic, thus still restricting the passage of water.

In addition, grafting modification of the surface of the porous insulating filler layer also does not affect the nature of the material of the internal part (i.e., a bulk phase) of the porous insulating filler layer itself being free of anion and cation ions, and the internal part (i.e., the bulk phase) of the porous insulating filler layer is still free of ions.

In the present application, due to the hydrophobic material of the porous insulating filler layer, the rate of water and ions passing through its pores is very slow, and thus the ion migration way B described above also proceeds very slowly. Thus, hydroxide ions generated by water electrolysis in the cathode chamber are almost consumed by calcium and magnesium ions in the cathode chamber before entering the anode chamber through the porous insulating filler layer.

Of course, protons and hydroxide ions can slowly pass through the porous insulating filler layer regardless of whether a voltage is applied to the anode and the cathode, and are mixed (the rate of passage of the protons and hydroxide ions when the voltage is applied is higher than that when the voltage is not applied). However, the protons and the hydroxide ions have been respectively discharged from the anode chamber and the cathode chamber before they are mixed, and thus acidic water and alkaline water can be obtained separately.

In a second aspect of the present application, provided is an electrochemical water treatment system, including: a reaction chamber, wherein
the reaction chamber is provided with: the composite electrode unit in the first aspect; and
within the reaction chamber, a chamber on a side of the cathode for water electrolysis of the composite electrode unit is a cathode chamber, and a chamber on a side of the anode for water electrolysis of the composite electrode unit is an anode chamber.

Preferably, the reaction chamber further includes: a power supply for supplying a direct current or an alternating current to the cathode for water electrolysis and the anode for water electrolysis.

Preferably, a top plate of the reaction chamber is in close contact with a top of the composite electrode unit, and a bottom plate of the reaction chamber is in close contact with a bottom of the composite electrode unit to achieve physical isolation between the cathode chamber and the anode chamber by the composite electrode unit, preventing direct mixing of water on both sides.

Preferably, the system further includes: a raw water tank and a reclaimed water tank;
the raw water tank communicates with the anode chamber through an anode chamber inlet pipeline;
the raw water tank communicates with the cathode chamber through a cathode chamber inlet pipeline;
the reclaimed water tank communicates with the anode chamber through an anode chamber outlet pipeline; and
the reclaimed water tank communicates with the cathode chamber through a cathode chamber outlet pipeline.

Preferably, the system further includes a filtering device disposed on the cathode chamber outlet pipeline and configured to filter solid matters in a liquid in the cathode chamber outlet pipeline.

Preferably, the raw water tank communicates with the reclaimed water tank through a circulating pipeline. In this way, reclaimed water in the reclaimed water tank can re-enter the reaction chamber through the original water tank for electrochemical treatment. The entire process can be cycled for multiple times until the effluent water quality of the reclaimed water meets the standard.

Preferably, the cathode for water electrolysis of the present application is a mesh electrode made of any catalyst capable of catalyzing a reaction on the cathode for water electrolysis. The anode for water electrolysis of the present application is a mesh electrode made of a catalyst capable of catalyzing a reaction on the anode for water electrolysis under acidic conditions.

In a third aspect of the present application, provided is an electrochemical water treatment method, performed by using any one electrochemical water treatment system in second aspect, the method including the steps of:
respectively injecting raw water containing calcium ions and/or magnesium ions into the cathode chamber and the anode chamber, turning on a power source, applying a direct current or an alternating current between the cathode for water electrolysis and the anode for water electrolysis to perform electrolysis, and carrying out a water electrolysis reaction in the composite electrode unit, wherein
when the direct current is supplied: hydrogen is generated in the cathode chamber while forming an alkaline environment during water electrolysis, such that the calcium ions and/or the magnesium ions form solid matter precipitates to reduce the hardness of the water; oxygen is generated in the anode chamber while forming an acidic environment during water electrolysis; and finally, alkaline water containing solid matters is obtained inside the cathode chamber and acidic water is obtained inside the anode chamber;
when the alternating current is supplied:
   before the change of a current direction in each alternating current cycle: hydrogen is generated in the cathode chamber while forming an alkaline environment during water electrolysis, such that the calcium ions and/or the magnesium ions form solid matter precipitates, and part of the solid matter precipitates and crystallizes on the surface of the original cathode for water electrolysis; and oxygen is generated in the anode chamber while forming an acidic environment during water electrolysis;
   after the change of the current direction in each alternating current cycle: the cathode for water electrolysis and the anode for water electrolysis are inverted, so that the original anode for water electrolysis becomes a temporary cathode to start producing hydroxide ions, the original cathode for water electrolysis becomes a temporary anode to start producing hydrogen ions, and the hydrogen ions cause the solid matters crystallized on the surface of the original cathode for water electrolysis to be dissolved from the surface of the original cathode for water electrolysis, realizing in-situ self-cleaning of the cathode for water electrolysis;
   in a next alternating current cycle, the calcium ions and/or the magnesium ions in the water are continuously precipitated in the cathode chamber, thus achieving the purpose of reducing the hardness of the water; and
   finally, alkaline water containing solid matters is obtained in the cathode chamber, and acidic water is obtained in the anode chamber.

Preferably, when the raw water also contains chloride ions, the chloride ions in the anode chamber are oxidized to chlorine gas and removed. Acidic water containing dissolved chlorine is obtained in the anode chamber, and has the effect of self-inhibiting bacteria.

Preferably, when the method is performed by using the electrochemical water treatment system described above:
the raw water tank contains raw water containing calcium ions and/or magnesium ions; and
the obtained alkaline water containing solid matters and acidic water are discharged into the reclaimed water tank through the cathode chamber outlet pipeline and the anode chamber outlet pipeline respectively, and mixed to obtain neutral water.

Preferably, the solid matters in the alkaline water containing solid matters are filtered by the filtering device. Of course, the solid matters may be removed by solid-liquid separation such as precipitation of water in the reclaimed water tank and filter pressing without the filtering device.

Preferably, the chlorine gas in the acidic water containing chlorine gas may be aerated first and then the acidic water is discharged into the reclaimed water tank. For example, an acidic water tank is disposed on the anode chamber outlet pipeline, and aerated. A chlorine gas discharge pipeline of the acidic water tank communicates with an absorption column. A sodium hydroxide solution is sprayed into the absorption column, and sodium hydroxide and chlorine gas form a valuable chemical product sodium hypochlorite.

Preferably, the direct current or the alternating current has a voltage of 1.5-30 V.

Preferably, a current density on the cathode for water electrolysis or the anode for water electrolysis is 1-1000 A/m² when the direct current or the alternating current is applied.

In addition, the electrochemical water treatment system of the present application is essentially an electrolytic descaling device, which is essentially different from the conventional water electrolysis device:
1. firstly, in terms of an object:
   The conventional water electrolysis device "achieves an electrochemical reaction through the migration of hydroxide ions or hydrogen ions", its main products are hydrogen and oxygen, and the hydroxide ions or hydrogen ions need to rapidly pass through a membrane to reach an anode or a cathode. For example, in CN116334647A, a water electrolysis device "achieves an electrochemical reaction through the migration of hydroxide ions", its main products are hydrogen and oxygen, and the hydroxide ions needs to rapidly pass through a membrane to reach an anode to participate in an electrolysis reaction to produce oxygen.

The feature of the composite electrode unit in the electrochemical water treatment system of the present application is that the porous insulating filler layer "blocks the migration of hydroxide ions" so that the hydroxide ions remain as much as possible in the cathode chamber to bond to calcium and magnesium ions.

2. In terms of a device structure:
The characteristics of the conventional water electrolysis device (e.g. CN116334647A) are as follows:
In the conventional water electrolysis device, a cathode, an anode, and a membrane are at a certain distance from each other and are not in close contact with one another. The cathode and the anode are respectively located on respective sides of an electrolytic cell, and the membrane is located in the middle of the electrolytic cell. Between the cathode and the membrane is a cathode chamber containing an electrolyte. Between the anode and the membrane is an anode chamber containing an electrolyte. Thus, when a voltage is applied between the cathode and the anode, the electrolytes of the entire cathode chamber and the entire anode chamber between the cathode and the anode are in a current loop and participate in a water electrolysis reaction.

At the same time, hydrogen ions or hydroxide ions pass through the membrane to participate in the water electrolysis reaction. The electrolytes of the entire cathode chamber and the entire anode chamber undergo a water electrolysis reaction to produce hydrogen and oxygen.

Whereas the electrochemical water treatment system of the present application primarily aims not to produce hydrogen and oxygen but to perform electrochemical descaling, and its characteristics are as follows:

The cathode for water electrolysis, the anode for water electrolysis, and the porous insulating filler layer are in close contact with one another to form a gapless composite electrode unit. The gapless composite electrode unit is located in the middle of the reaction chamber. Between the cathode for water electrolysis of the gapless composite electrode unit and a side wall of the reaction chamber is a cathode chamber containing raw water containing calcium ions and/or magnesium ions. Between the anode for water electrolysis of the gapless composite electrode unit and the other side wall of the reaction chamber is an anode chamber containing raw water containing calcium ions and/or magnesium ions. Therefore, when a voltage is applied between the cathode for water electrolysis and the anode for water electrolysis, only the raw water in the gapless composite electrode unit is in a current loop and participates in a water electrolysis reaction. The raw water in the cathode chamber and the anode chamber outside the gapless composite electrode unit is not in the current loop, does not participate in the water electrolysis reaction, only receives electrolysis products from the gapless composite electrode unit that are transferred through forced diffusion for conventional chemical reactions (e.g., water in the cathode chamber receives hydroxide ions generated on the surface of the cathode to produce calcium and magnesium precipitates, water in the anode chamber receives H⁺ and Cl₂ or hypochlorous acid, or the like generated on the surface of the anode for chemical disinfection, etc.).

Thus, only that portion of the raw water located in the gapless composite electrode unit (which may be one hundredth or one thousandth of the volume of the raw water in the cathode chamber and the anode chamber outside the entire gapless composite electrode unit) participates in the water electrolysis reaction.

Hydroxide ions are generated at the cathode after water electrolysis, and then forcibly diffused into an aqueous bulk phase of the cathode chamber at a high flow rate, accelerating their bonding to scaling ions such as calcium and magnesium ions, and rapidly crystallizing and precipitating, thereby increasing the utilization rate of the hydroxide ions.

H⁺ or chlorine gas or hypochlorous acid or the like generated at the anode after water electrolysis is forcibly diffused into an aqueous bulk phase of the anode chamber at a high flow rate, so that the aqueous bulk phase of the anode chamber forms an acidic environment and is rich in sterilizing substances such as hypochlorous acid and chlorine gas.

3. The membrane of the conventional water electrolysis device differs from the porous insulating filler layer of the electrolytic descaling device of the present application as follows:
The membrane of the conventional water electrolysis device is required to have low resistivity and high conductivity, and to be able to allow anions and/or cations in the electrolyte to rapidly pass through the membrane to participate in the electrolysis reaction. Generally, a material of the membrane of the conventional water electrolysis device itself contains exchangeable ions for ion exchange with the electrolyte so that anions and/or cations in the electrolyte rapidly pass through the membrane to participate in the electrolysis reaction.

The purpose of the porous insulating filler layer of the present application is to strongly prevent water and ions from passing through the porous insulating filler layer, so as to prevent hydroxide ions generated at the cathode from passing through the porous insulating filler layer to be bonded to hydrogen ions generated at the anode, and to prevent the hydrogen ions generated at the anode from passing through the porous insulating filler layer to be bonded to the hydroxide ions generated at the cathode, in turn to avoid reducing the utilization rate of the hydroxide ions for descaling.

Therefore, the material of the porous insulating filler layer of the present application itself does not contain exchangeable ions, so as to prevent hydroxide ions and hydrogen ions in the water from passing through the porous insulating filler layer through ion exchange (i.e., the aforementioned the ion migration way A).

In addition, the porous insulating filler layer of the present application has porous properties, and is thick (preferably 1-5 mm), and is preferably made of a hydrophobic material or the like. This can both slow down the passage of water and ions through the porous insulating filler layer, i.e., inhibit the migration rate of the ion migration way B.

4. In terms of a use method:
The greater the current of the water electrolysis device, the better, in order to increase the water electrolysis rate.

In the electrolytic descaling device of the present application, the smaller the current, the better, since only a very small amount of water needs to be electrolyzed to produce hydroxide ions sufficient to precipitate and remove calcium and magnesium ions, and a large amount of water need not be electrolyzed to produce hydrogen and oxygen, so it is desirable that the current be small to reduce the energy consumption of descaling.

Compared with the prior art, the present application has the following beneficial effects:
1. The device uses the porous insulating filler layer as a functional separator, and respectively integrates a cathode and an anode on respective side of the porous insulating filler layer to form a composite electrode unit with a unique "filler-electrode" integrated structure. Under the driving of a ultra-low direct-current operating voltage, the transmission of water is controlled through filler micropores to achieve blocking of the migration of hydroxide ions, while diffusing the hydroxide ions into an aqueous bulk phase of a cathode chamber by means of the local gradient diffusion effect generated by a catalytic reaction on the surface of an electrode and the forced diffusion effect of pumping, promoting rapid crystallization and precipitation of scale-forming ions in a cathode region, reducing the hardness of the water.
2. In addition, the device of the present application can also treat water containing chloride ions. During the removal of chloride ions being electrolyzed into chlorine gas at the anode, an acidic microenvironment (pH<7) is formed in the anode chamber due to the oxygen/chlorine evolution reaction. Moreover, the alkaline water obtained in the cathode and the acidic water obtained in the anode of the present application are neutralized outside the reaction chamber. This allows the chlorine gas generated by anode electrolysis in the anode chamber to be in an acidic water environment, and the chlorine gas can be efficiently purged and removed by gas stripping without additional acidification. And acidic water containing dissolved chlorine is obtained in the anode chamber, and has the effect of self-inhibiting bacteria.
3. In a preferred solution, the present application adopts an alternating current mode, the in-situ cleaning of scale can be achieved after periodic cathode and anode inversion to achieve self-cleaning of the cathode for water electrolysis, and no ultrasonic cleaner is provided to clean the scale.
4. The solution of the present application not only abandons the external addition of traditional scale inhibitors and acid and base agents, avoiding the risk of chemical residue pollution from the source, but also inhibits the growth of microorganisms through the simultaneous generation of active chlorine substances, thus solving the industry problem of mutual strengthening of scaling and corrosion.
5. In a preferred solution, in the composite electrode unit of the present application, the cathode for water electrolysis, the porous insulating filler layer and the anode for water electrolysis are in close contact with one another. In this way, since the direct distance between the cathode and the anode is extremely small, the resistance of an electrolyte between the cathode and the anode can be reduced, reducing the energy consumption of the operation of the system.

### BRIEF DESCRIPTION OF THE DRAWINGS

FIG. 1 is a schematic structural diagram of an electrochemical water treatment system according to the present application.
FIG. 2 is a schematic structural diagram of a conventional water electrolysis device.

### List of reference signs:

1-power supply; 2-cathode for water electrolysis; 3-anode for water electrolysis; 4-porous insulating filler layer; 5-reaction chamber; 6-raw water tank; 7-reclaimed water tank; 8-anode chamber inlet pipeline; 9-cathode chamber inlet pipeline; 10-anode chamber outlet pipeline; 11-cathode chamber outlet pipeline; 12-filtering device; 01-membrane; 02-cathode chamber of conventional water electrolysis device; and 03-anode chamber of conventional water electrolysis device.

### DETAILED DESCRIPTION

The present application is illustrated below with reference to specific embodiments, but the embodiments of the present application are not limited thereto. Experimental methods in which specific conditions are not indicated in the embodiments are performed usually according to the conventional conditions and the conditions described in the manual, or according to the conditions recommended by the manufacturer. The general equipment, materials, reagents, etc. used can be commercially obtained unless otherwise specified. The raw materials required in the following embodiments and comparative examples are commercially available.

The present application proposes a low-energy electrochemical water treatment method based on the synergistic effect of ion blocking and forced diffusion, and the core of this application lies in the innovative design of a gapless electrolysis unit consisting of a porous insulating filler layer 4 and catalytic electrodes. A device uses a hydrophobic porous insulating filler layer 4 as a functional separator, and respectively integrates a mesh cathode and a mesh anode which have high catalytic activity on respective side of the porous insulating filler layer to form a unique "filler-electrode" integrated structure. Under the driving of a ultra-low direct-current voltage of 1.5-30 V, the directional migration of hydroxide ions is blocked through their controlled transmission in the filler micropores, so that the hydroxide ions and calcium and magnesium ions are precipitated; and at the same time, the rapid crystallization and precipitation of scale-forming ions in water is promoted by means of the local forced diffusion effect caused by the rapid flow of water entering a cathode chamber at a cathode for water electrolysis. During electrolysis, an acidic microenvironment (pH<7) formed in an anode chamber due to the oxygen/chlorine evolution reaction allows chlorine gas generated by electrolysis to be efficiently purged and removed by gas stripping without additional acidification. This dual action mechanism allows a system to efficiently remove hardness ions from circulating water while maintaining a low energy consumption level, and greatly improve the concentration capacity of cooling water, thereby significantly reducing the amount of water replenishment and sewage discharge, and ultimately achieving efficient energy saving and zero emissions in industrial water treatment processes.

Preferred technical solutions are as follows:
the porous insulating filler layer 4 may be made of a hydrophobic resin material. The porous insulating filler layer 4 may be an open-cell foam plastic layer, including but not limited to a polyethylene polymer layer, for example substrates such as a polyethylene layer, a polystyrene layer, a polyvinyl chloride layer, a polypropylene layer, and a polyurethane layer. The porous insulating filler layer 4 has a porosity of 1-98% (preferably 30-60%), a thickness of 0.05-5 mm (preferably 0.1-2 mm), and a COD (Chemical Oxygen Demand) tolerance range of 0-10000 mg/L. The porous insulating filler layer 4 has a pore size distribution of 0.1-500 microns. The porous insulating filler layer 4 has a similar effect when it is a foam layer doped with an inorganic substance such as iron oxide.

The porous insulating filler layer 4 can also use other organic materials, including but not limited to a polyamide layer, a polyether sulfone layer, a polypropylene hollow fiber layer, a polytetrafluoroethylene composite layer, a sulfonated polyether ether ketone layer, a polybenzimidazole layer, and a polyimide layer.

A cathode for water electrolysis 2 is made of a material selected from one or a combination of the following materials: a nickel wire mesh (50-200 meshes), a stainless steel mesh (304/316 L), nickel foam (having a porosity of 85-95%), a nickel wire mesh supported Raney nickel catalyst (with a loading amount of 5-20%), platinum, and titanium.

An anode for water electrolysis 3 is a titanium-based composite coated electrode or platinum, graphene or the like, and the titanium-based composite coated electrode is selected from one or more of titanium coated iridium oxide (IrO₂-Ti), titanium coated ruthenium oxide (RuO₂-Ti), and an iridium-tantalum mixed oxide coating (IrO₂-Ta₂O₅-Ti).

The integrated self-cleaning function of the device is as follows: the electrode polarity is periodically switched by a square wave alternating current control system. The square wave alternating current switching frequency is 0.00001-0.1 Hz. Preferably, the square wave alternating current switching frequency is 0.0001-0.05 Hz. A peak-to-valley ratio of the square wave alternating current is (100:1)-(1:100). Preferably, the peak-to-valley ratio of the square wave alternating current is 10:1-1:10. Of course, other forms of alternating currents can also be used.

A water flow rate in a cathode chamber and an anode chamber is 0.1-1.0 m/s, preferably 0.3-0.5 m/s, ensuring that the ion mass transfer rate is 5× 10⁻⁵ mol/(m²·s) or more.

Flow channels of the cathode chamber and the anode chamber are designed as serpentine or baffle structures to prolong the hydraulic retention time to 10-30 seconds.

The electrochemical water treatment method is suitable for treatment of circulating water with the concentration of calcium and magnesium ions ranging from 10-20000 mg/L.

The present application will be further described below with reference to the accompanying drawings and embodiments.

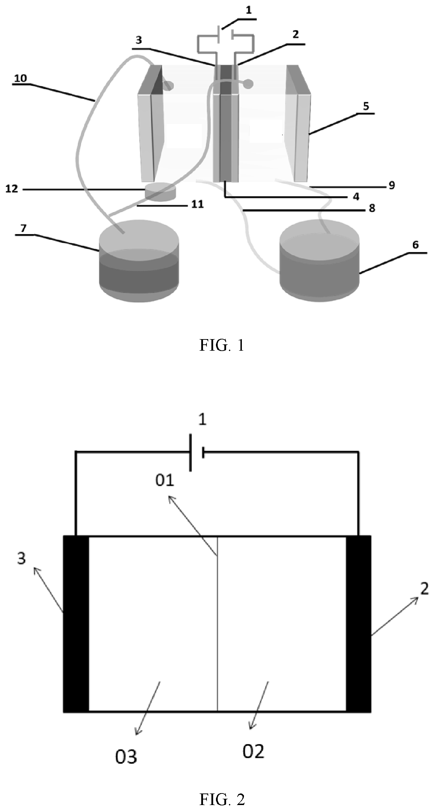

The technical solution of a circulating water electrochemical water treatment device provided by the application achieves the hardness ion removal and self-cleaning function of circulating water with low energy consumption and high efficiency through coupling of an innovative structural design with a reaction mechanism. Systematic elaboration is given below in terms of three dimensions of a device structure, a process flow and a reaction mechanism:
Firstly, as shown in FIG. 1, the device consists of the following core components:
Reaction chamber 5: a carbon steel or stainless steel substrate is used, and an outer surface of the reaction chamber 5 is coated with an epoxy resin anti-corrosion layer, which has both electrical insulation and corrosion resistance. An interior of the reaction chamber 5 is divided into an anode chamber and a cathode chamber by a composite electrode unit. The anode chamber and the cathode chamber are respectively provided with an anode chamber inlet pipeline 8, a cathode chamber inlet pipeline 9, an anode chamber outlet manifold 10, a cathode chamber outlet pipeline 11, and a filtering device 12 to form independent fluid channels. The filtering device 12 serves to intercept a crystalline suspension.

Only two side plates of the reaction chamber 5 are shown schematically in FIG. 1. A bottom plate, a top plate, a front plate, and a rear plate of the reaction chamber 5 are not shown.

The system further includes: a raw water tank 6 and a reclaimed water tank 7. The raw water tank 6 communicates with the anode chamber through the anode chamber inlet pipeline 8, the raw water tank 6 communicates with the cathode chamber through the cathode chamber inlet pipeline 9, the reclaimed water tank 7 communicates with the anode chamber through the anode chamber outlet pipeline 10, and the reclaimed water tank 7 communicates with the cathode chamber through the cathode chamber outlet pipeline 11.

Composite electrode unit: integrally formed by the cathode for water electrolysis 2, the anode for water electrolysis 3, and the porous insulating filler layer 4.

Cathode for water electrolysis 2: one or more of a nickel-based material with a high surface area (such as a nickel wire mesh, nickel foam or a metal framework supported with a Raney nickel catalyst) or platinum, titanium, and a stainless steel mesh are used, and its three-dimensional pore structure can strengthen hydroxide ions diffusion and crystal attachment.

Anode for water electrolysis 3: one or more of a titanium-based coated electrode (e.g., titanium coated iridium oxide, titanium coated ruthenium oxide, or an iridium-tantalum composite coating) or platinum, a graphene-doped electrode or the like are used, which have low chlorine-evolving oxygen-evolving overpotential characteristics and acid corrosion resistance.

Porous insulating filler layer 4: prepared from hydrophobic resin. The hydrophobic resin has a porosity of 3%-98% and a thickness of 0.05-5 mm, allowing controlled permeation of water molecules, and ensuring the stability of an ion concentration gradient in the anode chamber and the anode chamber.

The composite electrode unit has the same length and height as the side plates of the reaction chamber 5. This matching design of equal height and equal length achieves physical gapless close contact between the composite electrode unit and the reaction chamber 5, avoiding direct mixing of alkaline water and acidic water in the cathode chamber and the anode chamber within the reaction chamber 5. The design of the composite electrode unit reduces the distance between the cathode and the anode, effectively eliminating the resistance loss due to an electrode spacing of a conventional reaction chamber.

A power supply 1 is a square wave alternating current control system, specifically using an integrated low frequency square wave generator, with a frequency of 0.00001-0.1 Hz and an adjustable peak-to-valley ratio in the range of 100:1-1:100. The purpose of the square wave alternating current control system is to trigger self-stripping of scale on the surface of an electrode by creating a dynamic acid-base environment through periodic polarity reversal.

### Secondly, circulating water treatment process

Stock solution supply stage: circulating water containing high concentration of calcium and magnesium ions (having a calcium ion/magnesium ion concentration of 10-20000 mg/L) is stored in the raw water tank 6 and respectively pumped into the anode chamber and the cathode chamber of the reaction chamber 5 through the anode chamber inlet pipeline 8 and the cathode chamber inlet pipeline 9 at a flow rate of 0.1 m/s or more.

Preferably, one end of the anode chamber inlet pipeline 8 and one end of the cathode chamber inlet pipeline 9 are respectively arranged at the bottoms of the electrodes in the anode chamber and the cathode chamber, with pipeline openings facing the surfaces of the electrodes, so that a swirling flow is formed by the inertia of a fluid, covering the surface of the entire electrode.

Preferably, one end of the anode chamber outlet pipeline 10 and one end of the cathode chamber outlet pipeline 11 are respectively arranged at the tops of the anode chamber and the cathode chamber to facilitate rapid escape of gas generated by electrolysis, and prevent gas bubbles from adhering to the surface of the electrode to reduce the reaction efficiency. Preferably, the outlet pipeline and the inlet pipeline form a diagonal design. For example: an opening of the outlet pipeline is at the top of the side away from the electrode or an opening the pipeline is at the top of one side of the electrode. This may allow the flow of water in a flow path from an inlet to an outlet to continuously scour the surface of the electrode. At the same time, the residence time of the water flow within the chamber is prolonged. At the same time, forced convection is formed in the anode chamber and the cathode chamber by controlling the water flow rate. The Forced convection design can inhibit boundary layer thickening and enhance the ion mass transfer efficiency.

### Thirdly, electrochemical treatment stage

Typically, differential electrochemical reactions occur in the anode chamber and the cathode chamber under the driving of a ultra-low direct-current voltage of 1.5 V.

Cathode chamber: water electrolysis is performed to produce hydroxide ions (2H₂O+2e⁻→H₂↑+2OH⁻). The alkaline environment promotes the conversion of bicarbonate radicals to carbonate radicals (HCO₃⁻+OH⁻→CO₃²⁻+H₂O), and then the carbonate radicals and the hydroxide ions are bonded to calcium/magnesium ions to form calcium carbonate, magnesium hydroxide and magnesium carbonate crystals.

Anode chamber: chloride ions are oxidized to produce active chlorine (2Cl⁻→Cl₂↑+2e⁻), while water electrolysis is performed to produce hydrogen ions (H₂O→½O₂↑+2H⁺+2e⁻), and the acidic environment inhibits secondary scaling and achieves simultaneous sterilization and algae inhibition.

The meaning of secondary scaling is as follows:
Cathodic reaction: water electrolysis is performed to produce hydroxide ions (2H₂O+2e⁻→H₂↑+2OH⁻), and a pH in a cathode region rises (alkaline), prompting precipitation of calcium/magnesium ions (conventional scaling).

If micron-sized precipitates formed in the cathode region diffuses to an anode region with the water flow, they may be re-dissolved in a neutral or weakly acidic environment, but if the anodic environment is not properly controlled (e.g., the pH is not low enough), these particles may be re-deposited on the surface of the anode due to electrostatic adsorption or turbulent disturbance, forming "secondary scaling".

Reclaimed water recovery stage: treated anode reclaimed water (pH=2-4, rich in hydrogen ions) and cathode reclaimed water (pH=10-12, containing a crystalline suspension) are pumped into the reclaimed water tank 7 through anode chamber outlet pipeline 10 and the cathode chamber outlet pipeline 11, respectively (where the crystalline suspension flowing out of the cathode chamber is intercepted and filtered into the device 12 and no longer in contact with the anode reclaimed water), the electric neutrality is restored by a neutralization reaction (H⁺+OH⁻→H₂O), and precipitates are recycled after solid-liquid separation.

Fourthly, self-cleaning and energy efficiency optimization mechanism Dynamic scaling removal: the square wave alternating current control system of the power supply 1 periodically switches the electrode polarity to dissolve a microcrystalline scale layer on the surface of the electrode by using a local strongly acidic (hydrogen ions in the anode chamber) or strongly alkaline (hydroxide ions in the cathode chamber) environment at the moment of polarity reversal to achieve in-situ self-cleaning (the scale layer stripping efficiency of 95% or more).

Energy consumption control strategy: the gapless electrode design combined with the square wave power supply mode reduces concentration polarization loss, the integrated energy consumption is reduced by 20-70% compared with the prior art, and the power consumption of removing per kilogram of hardness (in terms of calcium carbonate) is 2-5 kWh.

A general formula for calculating energy consumption based on hydroxide ions generation and calcium ion precipitation is as follows:
When hydroxide ions are produced during the reaction by water electrolysis, and then bonded to calcium ions to form a precipitate (e.g., to form calcium hydroxide or calcium carbonate), the theoretical energy consumption of removing per kilogram of hardness (in terms of calcium carbonate) is calculated as follows:
1. Reaction path and electron transfer relationship
   Cathodic reaction (generating hydroxide ions):

      2H₂O+2e⁻→H₂↑+2OH⁻
   Precipitation reaction (removal of calcium ions):

      Ca²⁺+2OH⁻→Ca(OH)₂↓ or Ca²⁺+CO₃²⁻→CaCO₃↓
   Electron transfer relationship: 2 mol of electrons are required to remove 1 mol of calcium ions.
2. Calculation steps:
   Moles of calcium carbonate removed:
      $Moles = m \times 1000 / M \left(calcium carbonate\right) = 1000 m / 100 . 08 \approx 10 m \left(mol\right)$
      where m is a mass of hardness treated, in terms of calcium carbonate, in kg.
   Theoretical power required: ${Q}_{Theoretical} = n \times moles \times F = 2 \times 10 m \times 96485$ where n is the number of electrons transferred and F is the Faraday constant.
   Theoretical energy consumption (electrical energy=power×voltage): ${E}_{Theoretical} = {Q}_{Theoretical} \times V / \left(3.6\times {10}^{6}\right) \left(kWh\right)$
   Taking Embodiment 1 as an example: the hardness (in terms of calcium carbonate) $removal amount m = 1000 L \times 1000 mg / L \times 95 % = 0.95 kg ;$

Applied single-stage voltage V=4.4 V; and the single-stage voltage is a voltage applied between the cathode and the anode of the same composite electrode unit. There is one composite electrode unit within each reaction chamber 5. A plurality of reaction chambers 5 may be connected in series, which is also called multi-stage series. In the embodiments of the present application, only a one-stage reaction chamber 5 is used. $Theoretical energy consumption = 2 \times 10 \times 0.95 \times 96485 \times 4.4 / \left(3.6\times {10}^{6}\right) \approx 2.24 kWh ;$

For comparative patent CN101585569A, the theoretical energy consumption of removing per kilogram of hardness (in terms of calcium carbonate) is calculated as follows:
Since the voltage is not explicitly given in the embodiments of the comparative patent, for the device proposed in the comparative patent CN101585569A, we have found through research that the typical voltage range is 12-24 V, taking the lowest voltage of 12 V as an example (treating 1kg of calcium carbonate as an example): $Theoretical energy consumption = 2 \times 10 \times 1 \times 96485 \times 12 / 3.6 \times {10}^{6} \approx 6.43 kWh .$

Embodiments are provided below to illustrate the effects of the present application. Test material of the present application, e.g., materials used for the electrode and the porous insulating filler layer 4 can be purchased or self-made by existing methods. A preparation method for the porous insulating filler layer 4 of the present application is a conventional process. When the porous insulating filler layer 4 is made of a polymer material, a solution casting method is used. When the porous insulating filler layer 4 is made of a material containing a polymer and an inorganic substance, a solution casting method is used after mixing the two particles. When the porous insulating filler layer 4 is made of an inorganic material, a bonding pressing method is used.

Hardness or calcium and magnesium ions of water of the present application is in terms of calcium carbonate.

### Embodiment 1

1. Treatment object: 1 ton (1000 L) of concentrated circulating water stored in a raw water tank 6 with an initial calcium and magnesium ion concentration (in terms of calcium carbonate) of 1000 mg/L.
2. Device configuration:
   Electrode system: an anode for water electrolysis 3 employs a titanium-based iridium oxide coated electrode (with an IrO₂ loading amount of 2.5 mg/cm²), and a cathode for water electrolysis 2 employs a nickel foam electrode (with a porosity of 85%); and
   Porous insulating filler layer 4: a polyethylene-polyamide composite layer (with a porosity of 60%, a thickness of 2 mm, and a pore size of 0.1-0.5 µm) with a sulfonated modification layer on the surface.
   A preparation method for the polyethylene-polyamide composite layer is as follows:
   (1) 12.0 g of polyamide (PA6) is added into 108.0 mL of o-dichlorobenzene, heating is performed in an oil bath of 160°C, and mechanical stirring is performed (300 rpm) for 2 hours to completely dissolve polyamide to form a clear solution with a solid content of 10.0 wt%.
   (2) The PA6 solution was cooled to 100°C, 6.0 g of high density polyethylene (HDPE) particles are added in portions, the temperature is raised to 140°C at a rate of 1°C/min, and high-speed shear dispersion is performed at 140°C at 800 rpm for 1.5 hours.
   (3) 2.52 g of n-octanol is added at 140°C, and fully dispersed by stirring at 500 rpm for 30 minutes.
   (4) A homogeneous high-temperature solution is poured into a Teflon mold (with a mold depth of 2.5 mm) preheated to 100°C.
   (5) A cooling rate is controlled (slow cooling to 80°C at a rate of 0.1°C/min followed by natural cooling to room temperature) to induce phase separation and solvent evaporation to form pores.
   (6) Cooling is performed to 30°C or less, and demolding is performed.
   (7) Sulfonation modification is performed by soaking in concentrated sulfuric acid with a mass fraction of 98% for 40 min, followed by vacuum oven drying at 60°C for 12 h.
3. Operation process:
   (1) Feeding stage: concentrated circulating water is respectively injected into two electrode chambers at a flow rate of 0.5 m/s by a booster pump.
   (2) Electrochemical treatment: a square wave alternating current (with a single-stage voltage of 4.4 V, a current density of 200 A/m², a frequency of 0.0033 Hz (a cycle of 300 s/5 min), and a peak-to-valley ratio of 10:1) is applied, and the operation is performed for 4 cycles (a total duration of 1200 s);
   (3) Reclaimed water discharge: an anode chamber outlet pipeline 10 and a cathode chamber outlet pipeline 11 are opened, and reclaimed water is pumped into a reclaimed water tank 7 at a flow rate of 1.0 m/s.
   (4) Cyclic treatment: the steps of feeding, treatment and draining are repeated for 5 times, and the operations are performed for a total of 20 cycles for a total treatment time of 6000 s (100 minutes).
4. Treatment effect:
   Raw water tank 6: 1000 L of the concentrated circulating water is fully treated; and
   Effluent water quality: 1000 L of reclaimed water is collected, the concentration of calcium and magnesium ions is reduced to 50 mg/L, and the removal rate is 95%.

Actual energy consumption data: the initial cell voltage is 4.5 V, the cell voltage is increased to 4.7 V at the end of the treatment cycles (increased by 0.2 V), and the power consumption of removing per kilogram of hardness (in terms of calcium carbonate) is 2.5 kWh, which is reduced by 61.1% compared with the comparative patent CN101585569A (6.43 kWh).

### Embodiment 2

### High-temperature and corrosion-resistant scenarios:

1. Treatment object: 1.2 tons (1200 L) high-temperature concentrated circulating water (80°C) with an initial hardness (in terms of calcium carbonate) of 1200 mg/L.
2. Device configuration:
   Electrode system: an anode for water electrolysis 3 employs a titanium coated ruthenium oxide electrode, with a ruthenium loading amount of 1.8 mg/cm²; and a cathode for water electrolysis 2 employs a nickel wire mesh porous electrode; and
   Porous insulating filler layer 4: a polyphenylene sulfide-alumina composite layer (with a porosity of 70%, a thickness of 1.5 mm, and a pore size of 0.2-0.8 µm).
   A preparation method for the polyphenylene sulfide-alumina composite layer is as follows:
   (1) 20.0 g of polyphenylene sulfide (PPS) particles are added into 180 mL of N-methylpyrrolidone (NMP) under nitrogen protection, heating is performed to 216°C, and stirring is performed vigorously (at 800 rpm) until the particles are completely dissolved;
   (2) the temperature is reduced to 180°C, 30.0 g of aluminum oxide (Al₂O₃) powder is added, and ultrasonic treatment is performed for 30 min to ensure good dispersion;
   (3) 3.0 g of polyethylene glycol 400 is added, and uniform dispersion is performed by ultrasonic treatment to obtaine a uniform high-temperature slurry;
   (4) the uniform high-temperature slurry is rapidly poured into a stainless steel mold (with a mold depth of 1.65 mm) preheated to 150°C;
   (5) the mold is placed in an oven, first maintained at 180°C for 1.5 h (to prevent crystallization due to rapid cooling), and then cooled to 100°C at a rate of 0.8°C/min, and finally a residual solvent is volatilized to room temperature under ventilation conditions; and
   (6) demolding is performed.
3. Operation process:
   (1) Feeding stage: concentrated circulating water is injected at a flow rate of 0.6 m/s;
   (2) Electrochemical treatment: a square wave alternating current (with a single-stage voltage of 4.8 V, a frequency of 0.0017 Hz (a cycle of 600 s/10 min), and a peak-to-valley ratio of 8:1) is applied, the operation is performed for 6 cycles (a total duration of 3600 s), and the current density is 150 A/m²;
   (3) Reclaimed water discharge: reclaimed water is discharged at a flow rate of 0.8 m/s; and
   (4) Cyclic treatment: the above steps are repeated for 6 times, and the operations are performed for a total of 36 cycles for a total treatment time of 21,600 s (6 hours).
4. Treatment effect:
   Raw water tank 6: 1200 L of concentrated circulating water is treated; and
   Effluent water quality: 1200 L of reclaimed water is collected, the hardness is reduced to 72 mg/L, and the retention rate is 94%.

Actual energy consumption data: the initial cell voltage is 4.9 V, the cell voltage is increased to 5.2 V at the end of the treatment cycles (increased by 0.3 V), and the power consumption of removing per kilogram of hardness (in terms of calcium carbonate) is 3.8 kWh, which is reduced by 40.9% compared with the comparative patent CN101585569A (6.43 kWh).

### Embodiment 3

Low-cost environment-friendly solution:
1. Treatment object: 800 L of low-concentration concentrated circulating water with a hardness (in terms of calcium carbonate) of 300 mg/L.
2. Device configuration:
   Electrode system: an anode for water electrolysis 3 employs iridium-tantalum mixed oxide, and a cathode for water electrolysis 2 employs a nickel wire mesh supported Raney nickel electrode; and
   Porous insulating filler layer 4: a polypropylene hollow fiber-silica composite layer (with a porosity of 1%, a thickness of 0.05 mm, and a pore size of 0.3-500 µm) with a quaternary ammonium group-modified layer on the surface.
   A preparation method for the polypropylene hollow fiber-silica composite layer is as follows:
   (1) 15.0 g of polypropylene (PP) particles are dissolved in 135 mL of decalin at 140°C to form a solution;
   (2) the temperature is reduced to 100°C, 4.5 g of silica nanoparticles is added, stirring is performed vigorously, and uniform dispersion is performed by ultrasonic treatment;
   (3) 1.5 g of cyclohexane is added to obtaine a mixed slurry;
   (4) a polypropylene hollow fiber (PPHF) braided fabric is laid flat on the bottom of a mold (with a mold depth of 1 mm);
   (5) the mixed slurry is poured onto the PPHF layer while it is hot (100°C), ensuring adequate wetting;
   (6) natural cooling is performed to room temperature, and the solvent is volatilized;
   (7) demolding is performed; and
   (8) immersion is performed in 5 wt% quaternized silane in ethanol for 60 min, and curing is performed at 80°C for 1 hour.
3. Operation process:
   (1) Feeding stage: concentrated circulating water is injected at a flow rate of 0.3 m/s;
   (2) Electrochemical treatment: a square wave alternating current (with a single-stage voltage of 30 V, a frequency of 0.0011 Hz (a cycle of 900 s/15 min), and a peak-to-valley ratio of 12:1) is applied, the operation is performed for 3 cycles (a total duration of 2700 s), and the current density is 1000 A/m²;
   (3) Reclaimed water discharge: reclaimed water is discharged at a flow rate of 0.8 m/s; and
   (4) Cyclic treatment: the above steps are repeated for 13 times, and the operations are performed for a total of 40 cycles for a total treatment duration of 108,000 s (30 hours).
4. Treatment effect:
   Raw water tank 6: 800 L of circulating water is treated;
   Effluent water quality: 800 L of reclaimed water is collected, the hardness is reduced to 15 mg/L, and the retention rate is 95%.

Actual energy consumption data: the initial cell voltage is 30.1 V, the cell voltage is increased to 30.4 V at the end of the treatment cycles (increased by 0.3 V), and the power consumption of removing per kilogram of hardness (in terms of calcium carbonate) is 4.0 kWh, which is reduced by 37.7% compared with the comparative patent CN101585569A (6.43 kWh).

### Embodiment 4

### High-salt seawater pretreatment:

1. Treatment object: 2000 L of a seawater desalination pretreatment solution with a hardness (in terms of calcium carbonate) of 800 mg/L.
2. Device configuration:
   Electrode system: an anode for water electrolysis 3 employs a platinum-carbon electrode, and a cathode for water electrolysis 2 employs a nickel foam electrode;
   Porous insulating filler layer 4: a polytetrafluoroethylene-silicon carbide composite layer (with a porosity of 65%, a thickness of 2.2 mm, and a pore size of 0.5-500 µm);
   A preparation method for the polytetrafluoroethylene-silicon carbide composite layer is as follows:
   (1) 100 mL of a polytetrafluoroethylene dispersion having a solid content of 60 wt% (a solvent is water) is diluted with deionized water to a solid content of 24 wt%;
   (2) 45 g of silicon carbide (SiC) powder is added, stirring is performed vigorously, and uniform dispersion is performed by ultrasonic treatment;
   (3) double pore formers are added: 30.0 g of NaCl particles with a particle size of 200 microns and 15.0 g of sucrose powder with a particle size of 5 microns are added to obtaine a mixed slurry;
   (4) the mixed slurry is poured into a mold (with a mold depth of 2.5 mm);
   (5) slow drying is performed at room temperature (to prevent cracking), and then sintering is performed in an oven with stepwise increasing temperatures and holding times as follows: 60°C for 12 hours, 100°C for 12 hours, 200°C for 2 hours, and 327°C for 1 hour; and
   (6) demolding is performed after cooling to room temperature.
3. Operation process:
   (1) Feeding stage: concentrated circulating water is injected at a flow rate of 0.7 m/s;
   (2) Electrochemical treatment: a square wave alternating current (with a single-stage voltage of 4.2 V, a frequency of 0.00083 Hz (a cycle of 1200 s/20 min), and a peak-to-valley ratio of 5:1) is applied, the operation is performed for 5 cycles (a total duration of 6000 s), and the current density is 300 A/m²;
   (3) Reclaimed water discharge: reclaimed water is discharged at a flow rate of 1.0 m/s; and
   (4) Cyclic treatment: the above steps are repeated for 12 times, and the operations are performed for a total of 60 cycles for a total treatment time of 72,000 s (20 hours).
4. Treatment effect:
   Raw water tank 6: 2000 L of the pretreatment solution is treated; and
   Effluent water quality: 2000 L of reclaimed water is collected, the hardness is reduced to 64 mg/L, and the retention rate is 92%.

Actual energy consumption data: the initial cell voltage is 4.4 V, the cell voltage is increased to 4.6 V at the end of the treatment cycles (increased by 0.2 V), and the power consumption of removing per kilogram of hardness (in terms of calcium carbonate) is 3.7 kWh, which is reduced by 42.4% compared with the comparative patent CN101585569A (6.43 kWh).

### Embodiment 5

1. Treatment object: 2 tons (2000 L) concentrated circulating water of a cooling tower circulating water system with an initial hardness (in terms of calcium carbonate) of 800 mg/L.
2. Device configuration:
   Electrode system: an anode for water electrolysis 3 employs a platinum sheet electrode (with a thickness of 0.5 mm and a surface area of 0.2 m²), and a cathode for water electrolysis 2 employs a platinum mesh electrode (with a porosity of 75% and a pore size of 1.0 mm); and
   Porous insulating filler layer 4: a polyvinylidene fluoride-zirconia composite layer (with a porosity of 55%, a thickness of 1.5 mm, and a pore size of 0.2-0.8 µm).
   A preparation method for the polyvinylidene fluoride-zirconia composite layer is as follows:
   (1) 20.0 g of polyvinylidene fluoride (PVDF) particles are dissolved in 180 mL of dimethylformamide (DMF), and heated and stirred at 50°C to a clear solution;
   (2) 6.0 g of zirconia (ZrO₂) powder is added, stirring is performed vigorously, and uniform dispersion is performed by ultrasonic treatment;
   (3) 4.0 g of polyethylene glycol 1000 is added to obtaine a mixed slurry;
   (4) the mixed slurry is poured into a mold (with a mold depth of 1.6 mm);
   (5) the mold is kept at a constant temperature of 50°C for 24 hours;
   (6) after the solvent is basically volatilized, the temperature is raised to 90°C to further remove the residual solvent; and
   (7) cooling is performed to room temperature, and demolding is performed.
3. Operation process:
   (1) Feeding stage: concentrated circulating water is injected into two electrode chambers at a flow rate of 0.6 m/s;
   (2) Electrochemical treatment: a square wave alternating current (with a single-stage voltage of 5.0 V, a frequency of 0.00067 Hz (a cycle of 1500 s/25 min), and a peak-to-valley ratio of 10:1) is applied, the operation is performed for 3 cycles (a total duration of 4500 s), and the current density is 400 A/m²;
   (3) Reclaimed water discharge: an anode chamber outlet pipeline 10 and a cathode chamber outlet pipeline 11 are opened, and reclaimed water is pumped into a reclaimed water tank 7 at a flow rate of 1.0 m/s; and
   (4) Cyclic treatment: the above steps are repeated for 15 times, and the operations are performed for a total of 45 cycles for a total treatment time of 67,500 s (18.75 hours).
4. Treatment effect:
   Raw water tank: 2000 L of the concentrated circulating water is fully treated; and
   Effluent water quality: 2000 L of reclaimed water is collected, the concentration of calcium and magnesium ions is reduced to 32 mg/L, and the removal rate is 96%.

Actual energy consumption data: the initial cell voltage is 5.5 V, the cell voltage is increased to 5.7 V at the end of the treatment cycles (increased by 0.2 V), and the power consumption of removing per kilogram of hardness (in terms of calcium carbonate) is 4.4 kWh, which is reduced by 31.5% compared with the comparative patent CN101585569A (6.43 kWh).

### Embodiment 6

1. Treatment object: 1.5 tons (1500 L) of return water of an industrial boiler with an initial calcium and magnesium ion concentration (in terms of calcium carbonate) of 1200 mg/L.
2. Device configuration:
   Electrode system: an anode for water electrolysis 3 employs a platinum coated titanium electrode (with a platinum layer thickness of 50 microns and a surface area of 0.15 m²), and a cathode for water electrolysis 2 employs a porous platinum electrode (with a porosity 80% and a pore size of 0.5 mm); and
   Porous insulating filler layer 4: a sulfonated polyether ether ketone-polybenzimidazole composite layer (with a porosity of 98%, a thickness of 5 mm, and a pore size of 0.1-0.3 µm).
   A preparation method for the sulfonated polyether ether ketone-polybenzimidazole composite layer is as follows:
   (1) 5.0 g of sulfonated polyether ether ketone (SPEEK) and 5.0 g of polybenzimidazole (PBI) are respectively dissolved in 45 mL of dimethyl sulfoxide (DMSO) to obtain respective clear solutions;
   (2) the above two solutions are mixed, and stirred vigorously to ensure uniformity;
   (3) double pore formers are added to obtaine a mixed solution, double pore formers: ethylene glycol: 1.0 g and 1-propanol: 0.5 g;
   (4) the mixed solution is poured into a mold (with a mold depth of 5.5 mm);
   (5) the solvent is slowly volatilized (3 days) in a constant-temperature (70°C) well-ventilated oven;
   (6) after the solvent is completely volatilized, the temperature is raised to 110°C for further drying and curing; and
   (7) cooling is performed to room temperature, and demolding is performed.
3. Operation process:
   (1) Feeding stage: concentrated circulating water is injected into two electrode chambers at a flow rate of 0.4 m/s by a booster pump;
   (2) Electrochemical treatment: a square wave alternating current (with a single-stage voltage of 3.8 V, a frequency of 0.0021 Hz (a cycle of 480 s/8 min), and a peak-to-valley ratio of 10:1) is applied, the operation is performed for 5 cycles (a total duration of 2400 s), and the current density is 250 A/m²;
   (3) Reclaimed water discharge: an anode chamber outlet pipeline 10 and a cathode chamber outlet pipeline 11 are opened, and reclaimed water is pumped into a reclaimed water tank 7 at a flow rate of 0.8 m/s; and
   (4) Cyclic treatment: the above steps are repeated for 9 times, and the operations are performed for a total of 48 cycles for a total treatment time of 115,200 s (32 hours).
4. Treatment effect:
   Raw water tank: 1500 L of the concentrated circulating water is fully treated; and
   Effluent water quality: 1500 L of reclaimed water is collected, the concentration of calcium and magnesium ions is reduced to 24 mg/L, and the removal rate is 98%.

Actual energy consumption data: the initial cell voltage is 3.9 V, the cell voltage is increased to 4.1 V at the end of the treatment cycles (increased by 0.2 V), and the power consumption of removing per kilogram of hardness (in terms of calcium carbonate) is 3.8 kWh, which is reduced by 40.9% compared with the comparative patent CN101585569A (6.43 kWh).

### Embodiment 7:

1. Treatment object: 3 tons (3000 L) of circulating water of a central air conditioner with an initial calcium and magnesium ion concentration (in terms of calcium carbonate) of 600 mg/L.
2. Device configuration:
   Electrode system: an anode for water electrolysis 3 employs a platinum-ruthenium oxide composite electrode (with an RuO₂ loading amount of 3.0 mg/cm²), and a cathode for water electrolysis 2 employs a platinum coated stainless steel mesh electrode (with a porosity of 90%); and
   Porous insulating filler layer 4: a polyimide-mullite composite layer (with a porosity of 65%, a thickness of 2.2 mm, and a pore size of 0.3-1.0 micron).
   A preparation method for the polyimide-mullite composite layer is as follows:
   (1) 20.0 g of polyimide precursor polyamic acid (PAA) is dissolved in 180 mL of N-methylpyrrolidone (NMP);
   (2) 30.0 g of mullite powder is added, stirring is performed vigorously, and uniform dispersion is performed by ultrasonic treatment;
   (3) 10.0 g of polyethylene glycol 2000 is added to obtaine a mixed slurry;
   (4) the mixed slurry is poured into a mold (with a mold depth of 2.35 mm);
   (5) the mold is placed in a ventilated oven for temperature programmed imidization: 80°C for 1 hour, 135°C for 1 hour, 200°C for 1 hour, 250°C for 1 hour, and 300°C for 1 hour; and
   (6) natural cooling is performed to room temperature, and demolding is performed.
3. Operation process:
   (1) Feeding stage: concentrated circulating water is injected into two electrode chambers at a flow rate of 0.7 m/s by a booster pump;
   (2) Electrochemical treatment: a square wave alternating current (with a single-stage voltage of 4.2 V, a frequency of 0.0014 Hz (a cycle of 720 s/12 min), and a peak-to-valley ratio of 10:1) is applied, the operation is performed for 4 cycles (a total duration of 2880 s), and the current density is 350 A/m²;
   (3) Reclaimed water discharge: an anode chamber outlet pipeline 10 and a cathode chamber outlet pipeline 11 are opened, and reclaimed water is pumped into a reclaimed water tank 7 at a flow rate of 0.9 m/s; and
   (4) Cyclic treatment: the above steps are repeated for 4 times, and the operations are performed for a total of 16 cycles for a total treatment time of 46,080 s (12.8 hours).
4. Treatment effect:
   Raw water tank: 3000 L of the concentrated circulating water is fully treated; and
   Effluent water quality: 3000 L of reclaimed water is collected, the concentration of calcium and magnesium ions is reduced to 30 mg/L, and the removal rate is 95%.

Actual energy consumption data: the initial cell voltage is 4.5 V, the cell voltage is increased to 4.7 V at the end of the treatment cycles (increased by 0.2 V), and the power consumption of removing per kilogram of hardness (in terms of calcium carbonate) is 4.1 kWh, which is reduced by 36.2% compared with the comparative patent CN101585569A (6.43 kWh).

### Embodiment 8:

1. Treatment object: 0.8 tons (800 L) of geothermal recharge water with an initial calcium and magnesium ion concentration (in terms of calcium carbonate) of 1500 mg/L.
2. Device configuration:
   Electrode system: an anode for water electrolysis 3 employs a nano-platinum black electrode (with a specific surface area of 120 m²/g), and a cathode for water electrolysis 2 employs a platinum coated carbon fiber electrode (with a porosity of 85%); and
   Porous insulating filler layer 4: a polyimide-silicon nitride composite layer (with a porosity of 50%, a thickness of 1.2 mm, and a pore size of 0.1-0.4 µm) with an amino-modified layer on the surface.
   A preparation method for the porous insulating filler layer 4 is as follows:
   (1) 20.0 g of polyimide precursor polyamic acid (PAA) is dissolved in 180 mL of NMP;
   (2) 40.0 g of silicon nitride powder is added, stirring is performed vigorously, and uniform dispersion is performed by ultrasonic treatment;
   (3) 8.0 g of polyethylene glycol 2000 is added to obtaine a mixed slurry;
   (4) the mixed slurry is poured into a mold (with a mold depth of 1.5 mm);
   (5) the mold is placed in a ventilated oven for temperature programmed imidization: 80°C for 1 hour, 135°C for 1 hour, 200°C for 1 hour, 250°C for 1 hour, and 300°C for 1 hour;
   (6) natural cooling is performed to room temperature, and demolding is performed; and
   (7) a composite layer is put into a plasma reaction chamber, ammonia gas is introduced, and treatment is performed at a power of 100 W for 5 minutes to introduce amino on the surface of the polyimide-silicon nitride composite layer.
3. Operation process:
   (1) Feeding stage: concentrated circulating water is injected into two electrode chambers at a flow rate of 0.3 m/s by a booster pump;
   (2) Electrochemical treatment: a square wave alternating current (with a single-stage voltage of 4.5 V, a frequency of 0.00056 Hz (a cycle of 1800 s/30 min), and a peak-to-valley ratio of 10:1) is applied, the operation is performed for 6 cycles (a total duration of 10,800 s), and the current density is 100 A/m²;
   (3) Reclaimed water discharge: an anode chamber outlet pipeline 10 and a cathode chamber outlet pipeline 11 are opened, and reclaimed water is pumped into a reclaimed water tank 7 at a flow rate of 0.6 m/s; and
   (4) Cyclic treatment: the above steps are repeated for 16 times, and the operations are performed for a total of 100 cycles for a total treatment time of 180,000 s (50 hours).
4. Treatment effect:
   Raw water tank: 800 L of the concentrated circulating water is fully treated; and
   Effluent water quality: 800 L of reclaimed water is collected, the concentration of calcium and magnesium ions is reduced to 45 mg/L, and the removal rate is 97%.

Actual energy consumption data: the initial cell voltage is 4.7 V, the cell voltage is increased to 4.9 V at the end of the treatment cycles (increased by 0.2 V), and the power consumption of removing per kilogram of hardness (in terms of calcium carbonate) is 3.0 kWh, which is reduced by 53.3% compared with the comparative patent CN101585569A (6.43 kWh).

### Embodiment 9

1. Treatment object: 2.5 tons (2500 L) of desalination pretreated seawater with an initial calcium and magnesium ion concentration (in terms of calcium carbonate) of 2000 mg/L.
2. Device configuration:
   Electrode system: an anode for water electrolysis 3 employs an iridium oxide electrode, and a cathode for water electrolysis 2 employs a titanium mesh electrode (with a porosity of 95%); and
   Porous insulating filler layer 4: an asbestos layer (with a porosity of 75%, a thickness of 0.18 mm, and a pore size of 1-500 µm).
   A preparation method for the asbestos layer is as follows:
   (1) Protective preparation: operation is performed in a negative pressure glovebox or a special fume hood. Full-body protective clothing, goggles, an N100 mask, and gloves are worn.
   (2) Pretreatment: asbestos fibers are gently dissociated into shorter fibers (1-2 mm in length) (avoiding excessive crushing to produce dust) and sieved to remove large impurities.
   (3) Mixing:
      30.0 g of asbestos fibers is weighed, 7.5 g of silica sol is added, 9.0 g of a pore former-ammonium bicarbonate powder is added, 18 mL of ionized water is added, adjustment is performed to a suitable consistency (like a wet mortar), and uniform mixing is performed by gentle mixing with a low-speed mixer (to avoid dust generation due to fiber breakage).
   (4) Mold filling and prepressing: a mixed slurry is filled into a mold (with a mold depth of 0.3 mm) coated with a mold release agent (silicone grease), and slightly prepressed (under 0.5 MPa) to remove large bubbles and preliminarily orient the fibers.
   (5) Pressing: a pressure is applied (under 1.5 MPa for 2 minutes). The pressure should not be too high to avoid excessive damage to the pore structure.
   (6) Drying: careful demolding (low wet strength) is performed, and low temperature drying is performed at a well-ventilated place (at 40°C for 48 hours) to a constant weight. The silica sol is preliminary gelled. Heat treatment is performed, and after the heat treatment, a small amount of carbon may remain in a sample. If a completely white color is desired, the sample may be roasted in air at 500°C for 1.5 hours.
   (7) Cooling and sealing: cooling is performed to room temperature. The sample must be stored in a sealed manner (a double-layer plastic bag).
3. Operation process:
   (1) Feeding stage: concentrated circulating water is injected into two electrode chambers at a flow rate of 0.9 m/s by a booster pump;
   (2) Electrochemical treatment: a square wave alternating current (with a single-stage voltage of 1.5 V, a frequency of 0.0024 Hz (a cycle of 420 s/7 minutes), and a peak-to-valley ratio of 10:1) is applied, the operation is performed for 150 cycles (a total duration of 63,000 s/17. 5 hours), and the current density is 1 A/m²;
   (3) Reclaimed water discharge: an anode chamber outlet pipeline 10 and a cathode chamber outlet pipeline 11 are opened, and reclaimed water is pumped into a reclaimed water tank 7 at a flow rate of 1.0 m/s; and
   (4) Cyclic treatment: the above steps are repeated once, and the operations are performed for a total of 150 cycles for a total treatment time of 63,000 s (17.5 hours).
4. Treatment effect
   Raw water tank: 2500 L of concentrated circulating water is fully treated; and
   Effluent water quality: 2500 L of reclaimed water is collected, the concentration of calcium and magnesium ions is reduced to 80 mg/L, and the removal rate is 96%.

Actual energy consumption data: the initial cell voltage is 1.7 V, the cell voltage is increased to 2.2 V at the end of the treatment cycles (increased by 0.5 V), and the power consumption of removing per kilogram of hardness (in terms of calcium carbonate) is 4.2 kWh, which is reduced by 34.6% compared with the comparative patent CN101585569A (6.43 kWh).

### Embodiment 10

1. Treatment object: 4 tons (4000 L) of circulating cooling water from a petrochemical plant with an initial calcium and magnesium ion concentration (in terms of calcium carbonate) of 450 mg/L.
2. Device configuration:
   Electrode system: an anode for water electrolysis 3 adopts a platinum sheet electrode, and a cathode for water electrolysis 2 adopts a platinum coated graphite electrode (with a porosity of 88%); and
   Porous insulating filler layer 4: a silicon carbide layer (with a porosity of 68%, a thickness of 2.5 mm, and a pore size of 0.2-0.6 µm).
   A preparation method for the silicon carbide layer is as follows:
   (1) Mixing: 560.0 g of silicon carbide (SiC) coarse powder and 240.0 g of silicon carbide (SiC) fine powder are weighed. 52 g of a sintering aid Y₂O₃, 1005 g of a 8 wt% polyvinyl alcohol solution, 148 g of nano graphite powder, and 5.0 g of an ammonium polyacrylate dispersant are added.
   (2) Aging: after uniform mixing, a blank is sealed and aged for 24 hours.
   (3) Molding: dry-pressing molding is performed (a mold depth of 3.0 mm).
   (4) Drying: slow drying is performed in a low-temperature oven (40°C) to a constant weight to prevent cracking.
   (5) Binder burnout: heat preservation is performed in a muffle furnace at 600°C for 2 hours (at a heating rate of 0.5°C/min).
   (6) High temperature sintering is performed under an argon atmosphere (heating is performed from 25°C to 1000°C at a heating rate of 5°C/min, and then heat preservation is performed at 1000°C for 45 minutes).
   (7) Cooling: cooling is performed at a cooling rate of 2°C/min to room temperature.
   (8) The sintered sample is roasted under an air atmosphere at 700°C (at a heating rate of 1°C/min) for 3 hours to remove a residual graphite pore former by oxidation to form final pores.
3. Operation process:
   (1) Feeding stage: concentrated circulating water is injected into two electrode chambers at a flow rate of 0.5 m/s by a booster pump;
   (2) Electrochemical treatment: a square wave alternating current (with a single-stage voltage of 4.8 V, a frequency of 0.00093 Hz (a cycle of 1080 s/18 min), and a peak-to-valley ratio of 10:1) is applied, the operation is performed for 4 cycles (a total duration of 4320 s), and the current density is 600 A/m²;
   (3) Reclaimed water discharge: an anode chamber outlet pipeline 10 and a cathode chamber outlet pipeline 11 are opened, and reclaimed water is pumped into a reclaimed water tank 7 at a flow rate of 0.8 m/s; and
   (4) Cyclic treatment: the above steps are repeated for 10 times, and the operations are performed for a total of 40 cycles for a total treatment time of 43,200 s (12 hours).
4. Treatment effect:
   Raw water tank: 4000 L of the concentrated circulating water is fully treated; and
   Effluent water quality: 4000 L of reclaimed water is collected, the concentration of calcium and magnesium ions is reduced to 18 mg/L, and the removal rate is 96%.

Actual energy consumption data: the initial cell voltage is 5.1 V, the cell voltage is increased to 5.3 V at the end of the treatment cycles (increased by 0.2 V), and the power consumption of removing per kilogram of hardness (in terms of calcium carbonate) is 4.7 kWh, which is reduced by 26.9% compared with the comparative patent CN101585569A (6.43 kWh).

### Embodiment 11

### Continuous process:

1. Treatment object: 10000 L of circulating cooling water from a petrochemical plant with a calcium and magnesium ion concentration (in terms of calcium carbonate) of 400 mg/L.
2. Device configuration:
   Electrode system: an anode for water electrolysis 3 and a cathode for water electrolysis 2 both adopt an iridium tantalum oxide coated titanium mesh electrode; and
   Porous insulating filler layer 4: a polypropylene-polytetrafluoroethylene composite layer (with a porosity of 68%, a thickness of 0.2 mm, and a pore size of 10-200 µm).
   A preparation method for the polypropylene-polytetrafluoroethylene composite layer is as follows:
   (1) 15.0 g of polypropylene (PP) particles are dissolved in 135 mL of decalin at 145°C.
   (2) The temperature is lowered to 100°C, 30.0 g of an aqueous polytetrafluoroethylene dispersion is added, and emulsification and dispersion were performed by vigorous stirring.
   (3) A hot emulsion is quickly poured into a preheated (80°C) mold (with a depth of 0.25 mm).
   (4) Stepwise heating is performed in an oven (80°C for 6 hours, heat preservation at 120°C for 6 hours, and heat preservation at 140°C for 3 hours), and the solvent and water are removed.
   (5) Cooling is performed to less than 40°C, and demolding is performed.
3. Operation process:
   (1) Feeding stage: cooling water is pumped into two electrode chambers at a flow rate of 0.5 m/s by a booster pump; and
   (2) Electrochemical treatment: a square wave alternating current (with a single-stage voltage of 2.0 V) is applied, a frequency is set to a positive voltage bias of 950 s and a negative voltage bias of 50 s, the frequency is 0.001 Hz, and a peak-to-valley ratio is 100:1, while a switching current of 1 A/m² is set, and the negative voltage bias is performed for electrode self-cleaning at less than the switching current.
   (3) Continuous treatment is performed.
4. Treatment effect:
   The concentration of calcium and magnesium ions is reduced to 112 mg/L, the removal rate is 72%, a cell voltage is maintained at 2.3 V, and the power consumption of removing per kilogram of hardness (in terms of calcium carbonate) is 4.5 kWh.

### Embodiment 12

### Continuous process:

1. Treatment object: 20 tons (20000 L) of water from a cooling tower of a thermal power plant with an initial calcium and magnesium ion concentration (in terms of calcium carbonate) of 200 mg/L.
2. Device configuration:
   Electrode system: an anode for water electrolysis 3 adopts a coated platinum mesh electrode, and a cathode for water electrolysis 2 adopts a 316L mesh electrode; and
   Porous insulating filler layer 4: a polypropylene layer (with a porosity of 61%, a thickness of 0.5 mm, and a pore size of 10-200 microns).
   A preparation method for the polypropylene layer is as follows:
   (1) 20.0 g of polypropylene particles are dissolved in 160 mL of decalin at 140°C.
   (2) 6.0 g of liquid paraffin is added to obtaine a solution .
   (3) The obtained solution is poured into a preheated mold (100°C, with a depth of 0.65 mm).
   (4) The cooling rate is controlled to perform cooling from 140°C to 100°C at a cooling rate of 0.5°C/min, and then natural cooling is performed from 100°C to 25°C.
   (5) Demolding is performed.
3. Operation process:
   (1) Feeding stage: Water in the cooling tower is pumped into two electrode chambers at a flow rate of 1 m/s by a booster pump; and
   (2) Electrochemical treatment: a square wave alternating current (with a single-stage voltage of 1.5 V) is applied, a frequency is set to a positive voltage bias of 4900 s and a negative voltage bias of 100 s, the frequency is 0.0002 Hz, and a peak-to-valley ratio is 100:1, while a switching current of 1 A/m² is set, and the negative voltage bias is performed for electrode self-cleaning at less than the switching current.
   (3) Continuous treatment is performed.
4. Treatment effect:
   The concentration of calcium and magnesium ions is reduced to 20 mg/L, and the removal rate is 90%. A cell voltage is maintained at 2.0 V. The power consumption of removing per kilogram of hardness (in terms of calcium carbonate) is 3.4 kWh.

### Embodiment 13

### Chlorine removal by a continuous process:

1. Treatment object: 1 ton (1000 L) of circulating water from a data center with an initial chloride ion concentration of 800 mg/L.
2. Device configuration:
   Electrode system: an anode for water electrolysis 3 adopts a coated ruthenium iridium-graphene mesh electrode, and a cathode for water electrolysis 2 adopts a titanium mesh electrode; and
   Porous insulating filler layer 4: a polyamide layer (with a porosity of 52%, a thickness of 0.8 mm, and a pore size of 10-200 microns).
   A preparation method for the polyamide layer is as follows:
   (1) 20.0 g of polyamide (PA) particles are dissolved in 180 mL of formic acid solvent to form a solution.
   (2) 3.6 g of NaCl is added to obtaine a solution.
   (3) The obtained solution is poured into a mold (with a mold depth of 1.0 mm).
   (4) The mold is placed in a fume hood (formic acid volatilizes a pungent odor and corrosiveness), and the solvent is slowly volatilized at 35°C.
   (5) After the solvent is basically volatilized, residual formic acid on the surface is rinsed with water, and then vacuum drying is performed in an oven at 60°C.
   (6) Demolding is performed after cooling to room temperature.
3. Operation process:
   (1) Feeding stage: the circulating water from the data center is injected into two electrode chambers at a flow rate of 1 m/s by a booster pump; and
   (2) Electrochemical treatment: a square wave alternating current (with a single-stage voltage of 7.2 V) is applied, a frequency is set to a positive voltage bias of 95 s and a negative voltage bias of 5 s, the frequency is 0.01 Hz, and a peak-to-valley ratio is 50:1, while a switching current of 1 A/m² is set, and the negative voltage bias is performed for electrode self-cleaning at less than the switching current.
   (3) Continuous treatment is performed.
4. Treatment effect:
   The chloride ion concentration is reduced to 160 mg/L, and the removal rate is 80%. A cell voltage is maintained at 7.4 V.

### Embodiment 14

### Chlorine removal by a continuous process:

1. Treatment object: 5 tons (5000 L) of circulating water from a chemical plant with an initial chloride ion concentration of 1000 mg/L.
2. Device configuration:
   Electrode system: an anode for water electrolysis 3 adopts a coated ruthenium-iridium mesh electrode, and a cathode for water electrolysis 2 adopts a titanium coated ruthenium-iridium mesh electrode; and
   Porous insulating filler layer 4: a polyimide-polypropylene composite layer (with a porosity of 73%, a thickness of 1 mm, and a pore size of 10-200 microns).
   A preparation method for the polyimide-polypropylene composite layer is as follows:
   (1) 20.0 g of polyamic acid (PAA) is added to 180.0 mL of an N-methylpyrrolidone (NMP) solvent. Mechanical stirring is performed at a rotational speed of 400 rpm in a constant-temperature water bath at 25°C for 6 hours to obtain a uniform and clear PAA/NMP solution with a solid content of 10.0 wt%.
   (2) 6.0 g of polypropylene powder (PP) having an average particle diameter of 20 microns is added to the above PAA/NMP solution, and dispersed at 25°C for 30 minutes by using a high-shear emulsifying machine (at a rotational speed of 8000 rpm) until no agglomerated PP particles are visible to the naked eye in a slurry.
   (3) 10.0 g of polyethylene glycol 2000 is added to the slurry, and mechanical stirring is performed at a rotational speed of 500 rpm for 60 minutes at 25°C to ensure complete dissolution of polyethylene glycol 2000 to obtain a solution.
   (4) The obtained solution is poured into a mold (with a mold depth of 2 mm).
   (5) Temperature programmed drying and imidization: 80°C for 1 h, 120°C for 1 h, 200°C for 1 h, 250°C for 1 h, and 300°C for 1 h.
   (6) Cooling is performed to 50°C or less, and demolding is performed.
3. Operation process:
   (1) Feeding stage: the circulating water from the chemical plant is injected into two electrode chambers at a flow rate of 0.5 m/s by a booster pump; and
   (2) Electrochemical treatment: a square wave alternating current (with a single-stage voltage of 2.0 V) is applied, a frequency is set to a positive voltage bias of 1800 s and a negative voltage bias of 300 s, the frequency is 0.00047 Hz, and a peak-to-valley ratio is 20:1, while a switching current of 1 A/m² is set, and the negative voltage bias is performed for electrode self-cleaning at less than the switching current.
   (3) Continuous treatment is performed.
4. Treatment effect:
   The chloride ion concentration is reduced to 280 mg/L, and the removal rate is 72%. A cell voltage is maintained at 5.3 V.

### Embodiment 15

1. Treatment object: 10 tons (10000 L) of circulating cooling water from a garbage power plant with an initial chloride ion concentration of 1100 mg/L.
2. Device configuration:
   Electrode system: an anode for water electrolysis 3 adopts a ruthenium oxide-graphene mesh electrode, and a cathode for water electrolysis 2 adopts a platinum coated graphene mesh electrode; and
   Porous insulating filler layer 4: a polypropylene hollow fiber layer (with a porosity of 68%, a thickness of 1 mm, and a pore size of 0.2-0.6 µm).
   A preparation method for the polypropylene hollow fiber layer is as follows (forming a self-supporting layer):
   (1) Polypropylene hollow fibers (PPHFs) are tightly laid and fixed in a parallel arrangement inside a mold frame (with a mold depth of 2 mm).
   (2) A hot melt adhesive is sprayed onto fiber contact points, and then slight hot pressing is performed at 50°C to bond the fibers.
   (3) After cooling to room temperature, demolding is performed to obtain a porous layer consisting of pores of PPHF itself.
3. Operation process:
   (1) Feeding stage: circulating cooling water is injected into two electrode chambers at a flow rate of 0.5 m/s by a booster pump.
   (2) Electrochemical treatment: a square wave alternating current (with a single-stage voltage of 4.5 V, a frequency of 0.00093 Hz (a cycle of 1080 s/18 min), and a peak-to-valley ratio of 10:1) is applied, and the operation is performed for 4 cycles (a total duration of 4320 s).
   (3) Reclaimed water discharge: an anode chamber outlet pipeline 10 and a cathode chamber outlet pipeline 11 are opened, and reclaimed water is pumped into a reclaimed water tank 7 at a flow rate of 0.5 m/s.
   (4) Cyclic treatment: the above steps are repeated for 10 times, and the operations are performed for a total of 40 cycles for a total treatment time of 43,200 s (12 hours).
4. Treatment effect:
   Raw water tank: 10000 L of the circulating water from the garbage power plant is fully treated.

Effluent water quality: 10000 L of reclaimed water is collected, the chloride ion concentration is reduced to 44 mg/L, and the removal rate is 96%.

Actual energy consumption data: the initial cell voltage is 4.7 V, and the cell voltage is increased to 4.8 V at the end of the treatment cycles (increased by 0.1 V).

### Embodiment 16

1. Treatment object: 5 tons (5000 L) of a refuse leachate with an initial chloride concentration of 2800 mg/L.
2. Device configuration:
   Electrode system: an anode for water electrolysis 3 adopts an iridium oxide-graphene mesh electrode, and a cathode for water electrolysis 2 adopts an iridium oxide-graphene mesh electrode.
   Porous insulating filler layer 4: a polytetrafluoroethylene composite layer (with a porosity of 56%, a thickness of 0.5 mm, and a pore size of 10-500 µm).
   A preparation method for the polytetrafluoroethylene composite layer is as follows:
      (1) 50 mL of deionized water was added into 100 mL of a polytetrafluoroethylene dispersion (with a solid content 60 wt%, a solvent being water), and uniform mixing is performed by well stirring to obtain a diluted polytetrafluoroethylene dispersion having a solid content of 30 wt%.
      (2) 45 g of sodium chloride particles having a particle size ranging from 100 microns to 150 microns is added as a pore former, and continuous stirring is performed at a rotational speed of 500 rpm for 60 minutes in a constant-temperature water bath at 25°C to ensure the pore former particles are uniformly dispersed without agglomeration.
      (3) The obtained solution is poured into a mold (with a mold depth of 1 mm).
      (4) Room temperature drying, followed by temperature programming: drying is performed at 80°C for 1 hour, organic matters are removed at 250°C for 1 hour, and sintering is performed at 365°C for 1 hour.
      (5) Cooling is performed to 50°C or less, and demolding is performed.
3. Operation process:
   (1) Feeding stage: concentrated circulating water is injected into two electrode chambers at a flow rate of 1.0 m/s by a booster pump.
   (2) Electrochemical treatment: a square wave alternating current (with a single-stage voltage of 4.8 V, a frequency of 0.0017 Hz (a cycle of 600 s/10 min), and a peak-to-valley ratio of 10:1) is applied, and the operation is performed for 5 cycles (a total duration of 3000 s).
   (3) Reclaimed water discharge: an anode chamber outlet pipeline 10 and a cathode chamber outlet pipeline 11 are opened, and reclaimed water is pumped into a reclaimed water tank 7 at a flow rate of 1.0 m/s.
   (4) Cyclic treatment: the above steps are repeated for 10 times, and the operations are performed for a total of 50 cycles for a total treatment time of 30000 s (500 min).
4. Treatment effect:
   Raw water tank: 5000 L of the refuse leachate is fully treated.

Effluent water quality: 5000 L of reclaimed water is collected, the chloride ion concentration is reduced to 84 mg/L, and the removal rate is 97%.

Actual energy consumption data: the initial cell voltage is 4.9 V, and the cell voltage is increased to 5.0 V at the end of the treatment cycles (increased by 0.1 V).

A summary of the above embodiments is shown in Table 1 below.

**Table 1**

| **Embodiment** | **Anode for water electrolysis 3** | **Cathode for water electrolysis 2** | **Semi-permeable filler** | **Calcium and magnesium ion removal rate** |
|---|---|---|---|---|
| 1 | Titanium-based iridium oxide | Nickel foam | Polyethylene-polyamide composite layer | 95% |
| 2 | Titanium coated ruthenium oxide | Nickel wire mesh | Polyphenylene sulfide-alumina composite layer | 94% |
| 3 | Iridium-tantalum mixed oxide | Nickel wire mesh supported Raney nickel | Polypropylene hollow fiber-silica composite layer | 95% |
| 4 | Platinum on carbon | Nickel foam | Polytetrafluoroethylene-silicon carbide composite layer | 92% |
| 5 | Platinum sheet electrode | Platinum mesh electrode | Polyvinylidene fluoride-zirconia composite layer | 96% |
| 6 | Platinum coated titanium electrode | Porous platinum electrode | Sulfonated polyether ether ketone-polybenzimidazole composite layer | 98% |
| 7 | Platinum-ruthenium oxide composite electrode | Platinum coated stainless steel mesh | Polyimide-mullite composite layer | 95% |
| 8 | Nano-platinum black electrode | Platinum coated carbon fiber electrode | Polyimide-silicon nitride composite layer | 97% |
| 9 | Platinum-iridium alloy electrode | Platinized titanium mesh electrode | Asbestos layer | 96% |
| 10 | Platinum sheet electrode | Platinum coated graphite electrode | Silicon carbide layer | 96% |
| 11 | Iridium tantalum oxide coated titanium mesh electrode | Iridium tantalum oxide coated titanium mesh electrode | Polypropylene-polytetrafluor oethylene composite layer | 72% |
| 12 | Coated platinum mesh electrode | 316L mesh electrode | Polypropylene layer | 90% |

**Table 2 Comparison of chloride ion removal rate results of different embodiments**

| **Embodiment** | **Anode for water electrolysis 3** | **Cathode for water electrolysis 2** | **Semi-permeable filler** | **Chloride ion removal rate** |
|---|---|---|---|---|
| 13 | Ruthenium iridium-graphene mesh electrode | Titanium mesh electrode | Polyamide layer | 80% |
| 14 | Coated ruthenium-iridium mesh electrode | Coated ruthenium-iridium mesh electrode | Polyimide-polypropylene composite layer | 72% |
| 15 | Ruthenium oxide-graphene mesh electrode | Platinum coated graphene mesh electrode | Polypropylene hollow fiber layer | 96% |
| 16 | Iridium oxide-graphene mesh electrode | Iridium oxide-graphene mesh electrode | Polytetrafluoroethylene composite layer | 97% |

## Claims

1. A composite electrode unit, **characterized by** comprising: a cathode for water electrolysis (2), a porous insulating filler layer (4) and an anode for water electrolysis (3), wherein the porous insulating filler layer (4) is located between the cathode for water electrolysis (2) and the anode for water electrolysis (3);
a material of an internal part of the porous insulating filler layer (4) itself does not contain exchangeable ions, and the internal part refers to a non-surface part; and
the cathode for water electrolysis (2), the porous insulating filler layer (4) and the anode for water electrolysis (3) are in close contact with one another.

2. The composite electrode unit according to claim 1, **characterized in that** the porous insulating filler layer (4) is made of a hydrophobic material as a whole;
or the material of the internal part of the porous insulating filler layer (4) itself is a hydrophobic material and a surface of the porous insulating filler layer (4) is made of a hydrophilic material, and the internal part refers to the non-surface part.

3. The composite electrode unit according to claim 1, **characterized in that** the porous insulating filler layer (4) has a porosity of 1-98%, a thickness of 1-5 mm and a pore size of 10-500 microns.

4. The composite electrode unit according to claim 1, **characterized in that** a material of the porous insulating filler layer (4) is selected from: polyethylene, polystyrene, polyphenylene sulfide, polyvinyl chloride, polypropylene, polyurethane, polyamide, polyether sulfone, polypropylene hollow fiber, polytetrafluoroethylene, polyvinylidene fluoride, sulfonated polyether ether ketone, polybenzimidazole, polyimide, asbestos, alumina, silicon carbide, silicon nitride, zirconia, boron nitride, mullite, cordierite, aluminum titanate, or silica.

5. The composite electrode unit according to claim 3, **characterized in that** a surface of the porous insulating filler layer (4) is modified.

6. An electrochemical water treatment system, **characterized by** comprising: a reaction chamber (5), wherein
the reaction chamber (5) is provided with: the composite electrode unit according to any one of claims 1 to 5; and
within the reaction chamber (5), a chamber on a side of the cathode for water electrolysis (2) of the composite electrode unit is a cathode chamber, and a chamber on a side of the anode for water electrolysis (3) of the composite electrode unit is an anode chamber.

7. The electrochemical water treatment system according to claim 6, **characterized in that** the reaction chamber (5) further comprises: a power supply (1) for supplying a direct current or an alternating current to the cathode for water electrolysis (2) and the anode for water electrolysis (3).

8. The electrochemical water treatment system according to claim 6, **characterized in that** a top plate of the reaction chamber (5) is in close contact with a top of the composite electrode unit, and a bottom plate of the reaction chamber (5) is in close contact with a bottom of the composite electrode unit to achieve physical isolation between the cathode chamber and the anode chamber by the composite electrode unit.

9. The electrochemical water treatment system according to claim 6, **characterized by** further comprising: a raw water tank (6) and a reclaimed water tank (7), wherein
the raw water tank (6) communicates with the anode chamber through an anode chamber inlet pipeline (8);
the raw water tank (6) communicates with the cathode chamber through a cathode chamber inlet pipeline (9);
the reclaimed water tank (7) communicates with the anode chamber through an anode chamber outlet pipeline (10); and
the reclaimed water tank (7) communicates with the cathode chamber through a cathode chamber outlet pipeline (11).

10. The electrochemical water treatment system according to claim 9, **characterized by** further comprising: a filtering device (12) disposed on the cathode chamber outlet pipeline (11) and configured to filter solid matters in a liquid in the cathode chamber outlet pipeline (11).

11. The electrochemical water treatment system according to claim 9, **characterized in that** the raw water tank (6) communicates with the reclaimed water tank (7) through a circulating pipeline.

12. An electrochemical water treatment method, **characterized by** being performed by using the electrochemical water treatment system according to any one of claims 6 to 11, the method comprising the steps of:
respectively injecting raw water containing calcium ions and/or magnesium ions into the cathode chamber and the anode chamber, turning on a power source (1), applying a direct current or an alternating current between the cathode for water electrolysis (2) and the anode for water electrolysis (3) to perform electrolysis, and carrying out a water electrolysis reaction in the composite electrode unit, wherein
when the direct current is supplied: hydrogen is generated in the cathode chamber while forming an alkaline environment during water electrolysis, wherein the calcium ions and/or the magnesium ions form solid matter precipitates to reduce the hardness of the water; oxygen is generated in the anode chamber while forming an acidic environment during water electrolysis; and finally, alkaline water containing solid matters is obtained inside the cathode chamber and acidic water is obtained inside the anode chamber;
when the alternating current is supplied:
before the change of a current direction in each alternating current cycle: hydrogen is generated in the cathode chamber while forming an alkaline environment during water electrolysis, wherein the calcium ions and/or the magnesium ions form solid matter precipitates, and part of the solid matter precipitates and crystallizes on the surface of the original cathode for water electrolysis (2); and oxygen is generated in the anode chamber while forming an acidic environment during water electrolysis;
after the change of the current direction in each alternating current cycle: the cathode for water electrolysis (2) and the anode for water electrolysis (3) are inverted, wherein the original anode for water electrolysis (3) becomes a temporary cathode to start producing hydroxide ions, the original cathode for water electrolysis (2) becomes a temporary anode to start producing hydrogen ions, and the hydrogen ions cause the solid matters crystallized on the surface of the original cathode for water electrolysis (2) to be dissolved from the surface of the original cathode for water electrolysis (2), realizing in-situ self-cleaning of the cathode for water electrolysis (2);
in a next alternating current cycle, the calcium ions and/or the magnesium ions in the water are continuously precipitated in the cathode chamber, thus reducing the hardness of the water; and
finally, alkaline water containing solid matters is obtained in the cathode chamber, and acidic water is obtained in the anode chamber.

13. The electrochemical water treatment method according to claim 12, **characterized in that** when the raw water also contains chloride ions, the chloride ions in the anode chamber are oxidized to chlorine gas and removed.

14. The electrochemical water treatment method according to claim 12, **characterized in that** when the method is performed by using the electrochemical water treatment system according to claim 9:
the raw water tank (6) contains raw water containing calcium ions and/or magnesium ions; and
the alkaline water containing solid matters and the acidic water which are obtained in claim 12 are discharged into the reclaimed water tank (7) through the cathode chamber outlet pipeline (11) and the anode chamber outlet pipeline (10) respectively and mixed to obtain neutral water.

15. The electrochemical water treatment method according to claim 12, **characterized in that** when the method is performed by using the electrochemical water treatment system according to claim 10:
the solid matters in the alkaline water containing solid matters are filtered by the filtering device (12).

16. The electrochemical water treatment method according to claim 12, **characterized in that** the direct current or the alternating current has a voltage of 1.5-30 V.

17. The electrochemical water treatment method according to claim 12, **characterized in that** a current density on the cathode for water electrolysis (2) or on the anode for water electrolysis (3) is 1-1000 A/m² when the direct current or the alternating current is applied.
